# DEMANDE DE BREVET EUROPEEN

(11) **EP 4 394 523 A1**
(43) Date de publication de la demande: **03.07.2024**
(21) Numéro de dépôt: 22216824.7
(22) Date de dépôt: 27.12.2022
(51) Int. Cl.: G04B 17/32

(54) **PIÈCE POUR FIXER UNE DERNIÈRE SPIRE À L'EXTÉRIEUR D'UN RESSORT SPIRAL D'UN MOUVEMENT D'HORLOGERIE**

(71) Demandeur: ETA SA Manufacture Horlogère Suisse, 2540 Grenchen (CH)
(72) Inventeur: CHRISTAN, Julien, 2502 Bienne (CH); COURVOISIER, Raphaël, 2035 Corcelles (CH)
(74) Mandataire: ICB SA

(57) **Abrégé**

L'invention concerne une pièce de fixation (1) d'une extrémité libre (8) d'une dernière spire à l'extérieur (10) d'un ressort spiral (12) d'un mouvement d'horlogerie, ce ressort spiral (12) se présentant sous la forme d'un ruban enroulé en spires et qui est délimité par des première et seconde faces qui s'étendent parallèlement et à distance l'une de l'autre, la pièce de fixation (1) comprenant des moyens de serrage déformables élastiquement qui sont agencés pour être amenés en contact de l'extrémité libre (8) de la dernière spire à l'extérieur (10) du ressort spiral (12) afin d'exercer sur cette extrémité libre (8) une force de serrage élastique afin de garantir son immobilisation, cette force de serrage élastique s'exerçant selon au moins une première ligne de contact (A ;B) sur la première face du ressort spiral (12) et selon une surface de contact (S) sur la seconde face.

## Description

### Domaine technique de l'invention

La présente invention concerne une pièce pour fixer une dernière spire à l'extérieur d'un ressort spiral d'un ensemble balancier-spiral d'un mouvement d'horlogerie.

### Arrière-plan technologique

Dans le domaine de l'horlogerie, un spiral, associé à un balancier, forme un organe régulateur communément appelé balancier-spiral pour les pièces d'horlogerie mécaniques. En première approche, le spiral se présente sous la forme d'un très fin ressort qui s'enroule sur lui-même en spires concentriques lorsqu'aucune contrainte ne s'exerce sur lui. A l'état monté, une première extrémité du spiral, appelée première spire à l'intérieur, est fixée à une virole ajustée sur un axe du balancier, et une seconde extrémité du spiral, appelée dernière spire à l'extérieur, est fixée à un piton qui est une pièce généralement fixée au moyen d'un porte-piton dans un pont de balancier encore appelé coq.

Plus précisément, la base de temps pour les pièces d'horlogerie mécaniques, encore appelée système oscillant, comprend un couple balancier-spiral et un échappement. Le balancier se compose d'un axe de balancier pivoté entre un premier et un second palier et relié à une serge de balancier au moyen de bras radiaux. Le spiral est fixé via sa première spire à l'intérieur à l'axe du balancier, par exemple au moyen d'une virole, et il est fixé via sa dernière spire à l'extérieur à un point d'attache fixe tel qu'un piton porté par un porte-piton.

Quant à l'échappement, dans une forme de réalisation très répandue, il comprend un système de double plateau constitué d'un grand plateau qui porte une cheville de plateau et d'un petit plateau dans lequel est ménagée une encoche. L'échappement comprend également une ancre dont une tige d'ancre est pivotée entre un premier et un second palier. L'ancre se compose d'une baguette qui relie une fourchette à un bras d'entrée et à un bras de sortie. La fourchette est constituée d'une corne d'entrée et d'une corne de sortie et porte un dard. Le débattement de la fourchette est limité par une goupille de limitation d'entrée et une goupille de limitation de sortie qui peuvent être faites d'un seul tenant avec un pont d'ancre. Le bras d'entrée et le bras de sortie portent respectivement une palette d'entrée et une palette de sortie. Enfin, l'ancre coopère avec un mobile d'échappement comprenant une roue d'échappement et un pignon d'échappement, cet ensemble formé par la roue et le pignon d'échappement étant pivoté entre un premier et un second palier.

Un spiral est un ressort qui, comme son nom l'indique, prend la forme d'une spirale quand il est au repos. Enroulé dans un plan horizontal, parallèle au plan du mouvement d'horlogerie, le spiral ne sert qu'une fonction : faire osciller le balancier autour de sa position d'équilibre, encore appelée point mort, à une fréquence la plus constante possible. Lorsque le balancier quitte sa position d'équilibre en pivotant dans un sens donné, le spiral se contracte. Cela crée dans le spiral un couple de rappel qui a pour effet de faire revenir le balancier à sa position d'équilibre. Durant ce battement, le spiral se détend. Cependant, comme le balancier a acquis une certaine vitesse, et donc une énergie cinétique, il dépasse sa position d'équilibre en sens opposé au précédent jusqu'à ce que le couple de rappel exercé par le spiral sur le balancier arrête à nouveau ce dernier et l'oblige à tourner dans l'autre sens.

Le spiral se détend et se contracte donc alternativement : on dit qu'il respire. Or, de nombreux facteurs contribuent à empêcher un spiral de se développer de manière isochrone durant les phases d'expansion et de contraction. Le spiral doit notamment résister à l'oxydation et au magnétisme qui collent les spires entre elles et tendent à perturber la précision de la montre, voire à l'arrêter complètement. L'influence de la pression atmosphérique, par contre, est faible. Longtemps, c'est la température qui a été le coeur du problème, car la chaleur dilate le métal, tandis que le froid le rétrécit. Le spiral doit aussi être élastique pour se déformer et cependant toujours retrouver sa forme.

Le matériau utilisé pour la réalisation des spiraux est habituellement un acier. Ductile, l'acier utilisé doit résister à la corrosion. Depuis maintenant deux décennies, des développements proposent également de réaliser les spiraux en silicium. Les spiraux en silicium, notamment parce qu'ils sont insensibles au magnétisme, permettent d'atteindre une plus grande précision de marche que leurs prédécesseurs en acier. Par contre, leur prix de revient est plus élevé et, fragiles, ils sont plus difficiles à assembler.

Un spiral doit être isochrone. Peu importe jusqu'à quel point le balancier tourne, il doit toujours mettre le même temps à osciller. Si le spiral se contracte de quelques degrés seulement, il accumule peu d'énergie et revient lentement à sa position d'équilibre. Si le spiral est écarté de beaucoup de sa position d'équilibre, il part très vite en sens inverse. L'important est que ces deux déplacements se fassent dans la même durée. L'idée sous-jacente est que l'énergie dont dispose le spiral n'est pas constante et qu'il doit malgré tout fonctionner que la montre soit remontée à fond ou qu'elle soit dans ses dernières heures de réserve de marche.

En raison de leurs faibles dimensions, les spiraux sont difficiles à assembler. Or, la façon dont les deux extrémités d'un spiral sont fixées influe également beaucoup sur la précision de la marche du mouvement d'horlogerie. Dans la plupart des mouvements d'horlogerie mécaniques, les deux extrémités du spiral sont insérées dans une pièce percée et sont immobilisées au moyen d'une goupille montée en force manuellement à l'aide d'une pince. Il peut alors se produire une légère rotation du spiral, ce qui est préjudiciable à la précision de la marche du mouvement.

Une autre technique consiste à fixer les extrémités des spiraux au moyen d'une colle. Néanmoins, cette technique également a montré ses limites. Il a en effet été observé qu'en raison de sa viscosité, la colle exerce par capillarité une force de traction sur le spiral et peut plaquer les extrémités du spiral contre les parois du piton dans lequel ces extrémités sont engagées. La déformation résultante du spiral induit dans celui-ci des contraintes mécaniques qui sont préjudiciables à la régularité de sa marche.

Pour remédier à ces problèmes, la Demanderesse a déjà proposé un procédé de fixation d'un ressort spiral consistant à coller la dernière spire à l'extérieur d'un ressort spiral dans un piton au moyen d'une goutte de colle fluide polymérisable par exemple au moyen d'un rayonnement ultraviolet. Ainsi, même si, au moment du dépôt de la goutte de colle, par exemple au moyen d'un distributeur de colle du type seringue, l'extrémité libre de la dernière spire du spiral se déplace un peu sous l'effet du poids de la goutte de colle, ce qui induit dans le ressort spiral des contraintes mécaniques non désirées, la colle est, avant durcissement, suffisamment fluide pour permettre à l'extrémité libre de la dernière spire du spiral de retrouver spontanément sa position de repos. Les contraintes mécaniques induites dans le ressort spiral au moment du dépôt de la goutte de colle liquide disparaissent donc d'elles-mêmes, de sorte que la régularité de la marche du ressort spiral n'est pas affectée par l'opération de collage de ce dernier.

La solution ci-dessus permet ainsi de fixer un ressort spiral par l'extrémité libre de sa dernière spire à l'extérieur dans un piton en éliminant totalement ou du moins pour la plus grande part les contraintes mécaniques qui sont habituellement induites dans un tel ressort spiral lors de son montage. La régularité de marche du ressort spiral en est ainsi grandement améliorée. A l'usage, la Demanderesse s'est néanmoins rendu compte que le plot de colle durcie formé lorsque l'on polymérise la goutte de colle liquide dont on se sert pour fixer l'extrémité libre de la dernière spire à l'extérieur du ressort spiral avait parfois tendance à se désolidariser du piton, ce qui, bien sûr, entraîne la panne immédiate du mouvement d'horlogerie dans lequel est installé ce ressort spiral. Une telle situation est notamment due à des problèmes d'état de surface du piton qui empêchent le plot de colle d'adhérer parfaitement au piton ainsi qu'au vieillissement du plot de colle dans le temps. En outre, lorsque la température ambiante augmente, la plupart des colles se ramollissent, ce qui a pour effet de modifier la longueur active, et donc la raideur du spiral, et d'influer donc négativement la marche du mouvement d'horlogerie.

On notera enfin qu'en particulier dans le cas des mouvements d'horlogerie haut de gamme, on évite autant que possible l'utilisation de colles ou de produits de synthèse.

### Résumé de l'invention

La présente invention a pour but de remédier aux inconvénients mentionnés ci-dessus ainsi qu'à d'autres encore en procurant une pièce dont un des avantages réside dans le fait qu'elle permet la fixation sans colle de la dernière spire à l'extérieur d'un ressort spiral.

A cet effet, la présente invention concerne une pièce agencée pour assurer la fixation d'un ressort spiral d'un mouvement d'horlogerie, ce ressort spiral, enroulé en spires, étant délimité par des première et seconde faces qui s'étendent à distance l'une de l'autre, cette pièce de fixation comprenant des moyens de serrage déformables élastiquement qui sont agencés pour être amenés en contact du ressort spiral afin d'exercer sur ce ressort spiral une force de serrage élastique afin de garantir son immobilisation, cette force de serrage élastique s'exerçant selon au moins une première ligne de contact sur la première face du ressort spiral et selon une surface de contact sur la seconde face.

Selon une forme particulière d'exécution de l'invention, la force de serrage élastique s'exerce sur la première face du ressort spiral selon des première et seconde lignes de contact.

Selon une autre forme particulière d'exécution de l'invention, les moyens de serrage se présentent sous la forme de premier et second moyens de serrage distincts qui sont en vis-à-vis l'un de l'autre.

Selon encore une autre forme d'exécution de l'invention, les premier et second moyens de serrage se présentent sous la forme de deux bras élastiquement déformables dont les extrémités libres en regard sont agencées pour être amenées en contact de l'extrémité libre de la dernière spire à l'extérieur du ressort spiral afin d'exercer sur cette extrémité libre une force de serrage élastique selon une direction perpendiculaire à un plan dans lequel s'étend le ressort spiral.

Selon encore une autre forme d'exécution de l'invention, la pièce de fixation se présente sous la forme d'un diapason qui se referme sur lui-même au niveau des extrémités libres en regard des deux bras.

Selon encore une autre forme d'exécution de l'invention, la pièce de fixation est munie de moyens de préhension qui sont agencés pour permettre d'écarter les moyens de serrage de l'extrémité libre de la dernière spire à l'extérieur du ressort spiral afin de libérer cette extrémité libre.

Selon encore une autre forme d'exécution de l'invention, la pièce de fixation comprend des moyens pour son montage sur un pont de balancier ou autour d'un palier de pivotement du balancier.

Selon encore une autre forme d'exécution de l'invention, l'assemblage entre la pièce et l'extrémité libre de la dernière spire à l'extérieur du ressort spiral est démontable.

Selon encore une autre forme d'exécution de l'invention, la pièce de fixation est obtenue par étampage et pliage.

Selon encore une autre forme d'exécution de l'invention, la pièce de fixation est réalisée en un matériau plus dur que le matériau dans lequel est réalisé le ressort spiral.

Selon encore une autre forme d'exécution de l'invention, le ressort spiral se présente sous la forme d'un ruban dont les première et seconde faces s'étendent parallèlement l'une à l'autre.

Selon encore une autre forme d'exécution de l'invention, le ressort spiral est muni d'une plaquette sur laquelle les moyens de serrage exercent la force de serrage élastique pour assurer son immobilisation.

Grâce à ces caractéristiques, la présente invention procure une pièce qui permet avantageusement la fixation sans colle d'une extrémité libre d'une dernière spire à l'extérieur d'un ressort spiral. Cela permet donc d'éviter tous les problèmes liés à l'emploi d'une colle pour un tel montage et garantit, le cas échéant, le caractère démontable d'un tel ensemble pièce de fixation-ressort spiral. En outre, la pièce de fixation peut être obtenue très simplement, notamment par étampage et pliage, et est donc peu coûteuse à produire. Le prix de revient d'un ensemble balancier-spiral équipé d'une pièce de fixation selon l'invention est encore abaissé dans le cas où la pièce de fixation est munie d'un moyen pour sa fixation sur un pont, tel un pont de balancier pour un ensemble balancier-spiral ou autour d'un palier de pivotement du balancier ; en effet, dans ce cas, la pièce de fixation selon l'invention remplit simultanément les fonctions de piton et de porte-piton.

### Brève description des figures

D'autres caractéristiques et avantages de la présente invention ressortiront plus clairement de la description détaillée qui suit d'un mode de réalisation d'une pièce de fixation d'un ressort spiral selon l'invention, cet exemple étant donné à titre purement illustratif et non limitatif seulement en liaison avec le dessin annexé sur lequel :

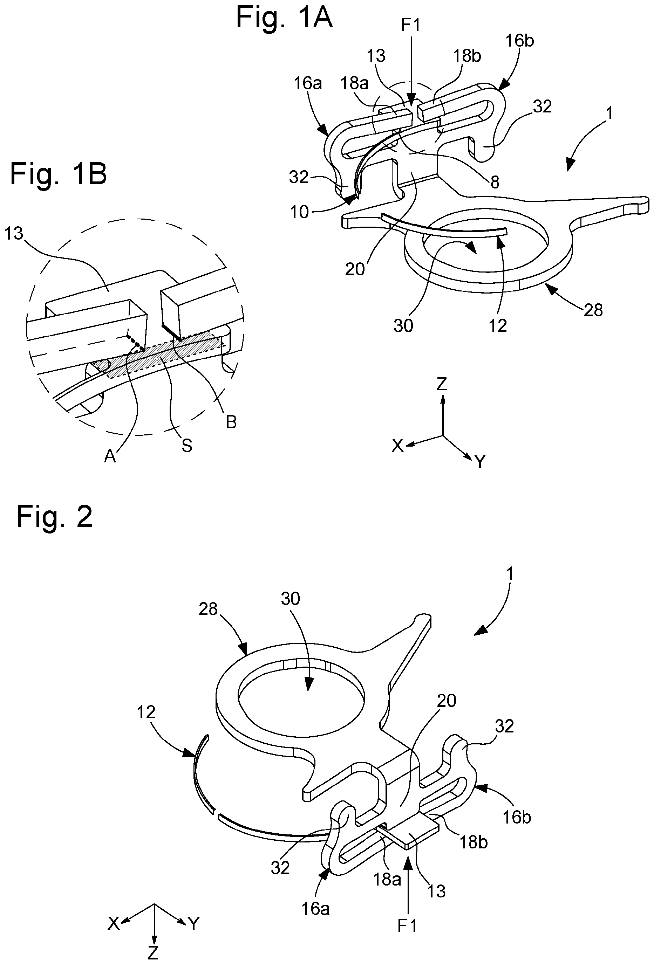

- la figure 1A est une vue de dessus en perspective d'une pièce de fixation selon l'invention, cette pièce de fixation, agencée à la façon d'un diapason, permettant l'immobilisation par pincement d'une extrémité libre d'une dernière spire à l'extérieur d'un ressort spiral ;
- la figure 1B est une vue à plus grande échelle de la zone entourée d'un cercle sur la figure 1A ;
- la figure 2 est une vue en perspective de dessous du diapason de la figure 1A ;

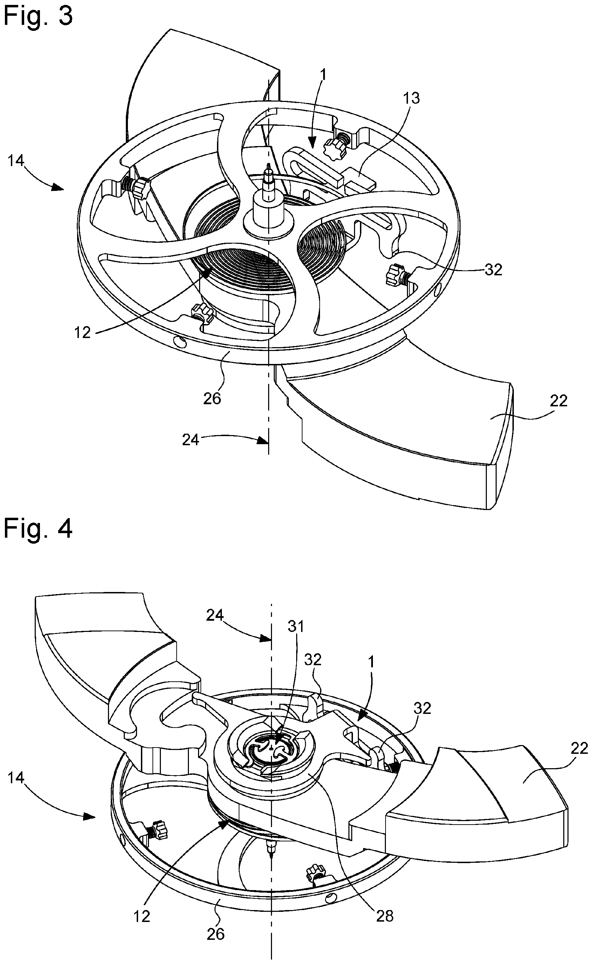

- la figure 3 est une vue de dessus en perspective d'un ensemble balancier-spiral équipé de la pièce de fixation selon l'invention ;
- la figure 4 est une vue de dessous en perspective de l'ensemble balancier spiral selon l'invention.

### Description détaillée de l'invention

La présente invention procède de l'idée générale inventive qui consiste à procurer une pièce permettant la fixation sans collage d'une extrémité libre d'une dernière spire à l'extérieur d'un ressort spiral. En effet, conformément à l'invention, la pièce de fixation est typiquement munie d'un premier et d'un second bras qui, selon le mode d'exécution retenu, exercent sur l'extrémité libre de la dernière spire à l'extérieur du ressort spiral une force élastique de serrage selon une direction qui est perpendiculaire au plan dans lequel s'étend cette dernière spire. Par exemple réalisée par étampage et pliage, la pièce de fixation est telle que les bras peuvent être repliés sur l'extrémité libre de la dernière spire à l'extérieur du ressort spiral, de façon à exercer sur cette extrémité libre une force élastique de serrage suffisante pour garantir son immobilisation. En outre, étant donné que le blocage de la dernière spire à l'extérieur du ressort spiral est obtenu par pliage des bras, on comprend aisément que, si nécessaire, l'ensemble formé par la pièce de fixation et le ressort spiral peut être désassemblé par simple dépliage des bras. En outre, pouvant être obtenue par étampage-pliage, la pièce de fixation est peu coûteuse à produire. Le prix de revient est encore abaissé dans le cas où la pièce de fixation est munie de moyens pour sa fixation sur un pont tel un pont de balancier du mouvement d'horlogerie ; dans ce dernier cas, l'invention procure une pièce qui fait office à la fois de piton et de porte-piton.

Désignée dans son ensemble par la référence numérique générale 1, la pièce selon l'invention est destinée à permettre la fixation d'une extrémité libre 8 d'une dernière spire à l'extérieur 10 d'un ressort spiral 12 pour un mouvement d'horlogerie. Dans l'exemple représenté au dessin, le ressort spiral 12 est muni d'une plaquette 13 fixée par tout moyen approprié tel que le soudage ou bien faite d'une pièce avec l'extrémité libre 8 de la dernière spire à l'extérieur 10. A cet effet, selon l'invention, la pièce de fixation 1 comprend des moyens de serrage déformables élastiquement qui sont agencés pour être amenés en contact et pincer une plaquette 13 prévue à l'extrémité libre 8 de la dernière spire à l'extérieur 10 du ressort spiral 12 afin d'exercer sur cette plaquette 13 une force de serrage élastique F1 selon une direction Z perpendiculaire à un plan X, Y dans lequel s'étend le ressort spiral 12.

En assurant l'immobilisation par pinçage de la plaquette 13 prévue à l'extrémité libre 8 de la dernière spire à l'extérieur 10 du ressort spiral 12 selon la direction Z seulement, on limite le plus possible toute influence néfaste que la fixation du ressort spiral 12 au moyen de la pièce de fixation 1 selon l'invention peut avoir sur la précision de marche d'un ensemble balancier-spiral 14 équipé d'une telle pièce de fixation 1. En effet, il est connu qu'exercer une contrainte mécanique sur l'extrémité libre 8 de la dernière spire à l'extérieur 10 d'un ressort spiral 12 selon une direction Z perpendiculaire au plan X, Y dans lequel s'étend le ressort spiral 12 est considérablement (dans un facteur de l'ordre de 10) moins préjudiciable à la précision de marche d'un ensemble balancier-spiral 14 que lorsque le ressort spiral 12 est contraint dans le plan X, Y dans lequel il s'étend.

Selon l'invention, la pièce de fixation 1 comprend des premier et second moyens de serrage distincts qui assurent l'immobilisation de la plaquette 13 dont est munie l'extrémité libre 8 de la dernière spire à l'extérieur 10 du ressort spiral 12, ce qui permet en particulier d'éviter tout risque que cette plaquette 13 ne glisse et pivote sur elle-même, ce qui serait bien sûr préjudiciable au bon fonctionnement de l'ensemble balancier-spiral 14 et nécessiterait le retour en usine de la pièce d'horlogerie équipée d'un tel ensemble balancier-spiral 14.

Selon une forme d'exécution préférée mais non limitative, les premier et second moyens de serrage se présentent sous la forme de deux bras 16a, 16b élastiquement déformables dont les extrémités libres respectives 18a, 18b en regard sont agencées pour être amenées en contact et pincer la plaquette 13 prévue à l'extrémité libre 8 de la dernière spire à l'extérieur 10 du ressort spiral 12 selon deux lignes de contact A, B distinctes. Préférentiellement mais non exclusivement, la pièce de fixation 1 se présente sous la forme d'une pince en forme de diapason qui se referme sur elle-même au niveau des extrémités libres 18a, 18b en regard des deux bras 16a, 16b, la plaquette 13 présente à l'extrémité libre 8 de la dernière spire à l'extérieur 10 du ressort spiral 12 étant pincée entre les extrémités libres 18a, 18b de ces deux bras 16a, 16b et une traverse 20 qui relie ces deux bras 16a, 16b entre eux. Selon l'invention, cette traverse 20 assure le serrage élastique de la plaquette 13 selon une surface de contact S.

On constate donc qu'en amenant par déformation élastique les deux bras 16a, 16b en contact avec la plaquette 13, cela permet de plaquer cette plaquette 13 contre la traverse 20 de la pièce de fixation 1 et d'assurer l'immobilisation de la plaquette 13 selon une force de serrage élastique qui, d'un côté du ruban qui forme le ressort spiral 12, s'exerce selon deux lignes de contact A, B et qui, de l'autre côté de ce même ruban formant le ressort spiral 12, s'exerce selon la surface de contact S.

La pièce de fixation 1 peut être réalisée par tout moyen approprié, par exemple par étampage et pliage, de sorte que son prix de revient est très limité. Elle peut être fixée sur un pont 22 du mouvement d'horlogerie. A cet effet, selon un mode préféré d'exécution de l'invention, la pièce de fixation 1 comprend des moyens pour son montage autour d'un axe de pivotement 24 d'un balancier 26 du mouvement d'horlogerie. Dans ce but, la pièce de fixation 1 est prolongée par un élément de montage 28 muni d'une ouverture 30 dont le diamètre intérieur est ajusté sur un diamètre extérieur d'une portée du pont 22 de balancier ou d'un palier de pivotement 31 qui peut être de type connu de l'homme du métier. La pièce de fixation 1 selon l'invention remplit ainsi avantageusement à la fois la fonction de piton et de porte-piton.

Selon une forme spéciale d'exécution de l'invention, la pièce de fixation 1 est munie de moyens de préhension par exemple du type de cornes 32 qui sont agencées pour permettre, lorsqu'on les pince au moyen de brucelles, d'écarter les extrémités libres 18a, 18b en regard des deux bras 16a, 16b de l'extrémité libre 8 de la dernière spire à l'extérieur 10 du ressort spiral 12 afin de libérer cette extrémité libre 8. Ainsi, en cas de nécessité, étant donné l'absence de colle et le caractère élastiquement déformable de la pince de fixation 1, il est possible de désassembler l'ensemble formé par la pièce de fixation 1 et le ressort spiral 12.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées. On comprendra en particulier que, pour son immobilisation par serrage élastique, la présence de la plaquette 13 n'est pas indispensable. En effet, le ressort spiral 12 peut être immobilisé au moyen de la pièce de fixation 1 selon l'invention en engageant directement l'extrémité libre 8 de la dernière spire à l'extérieur 10 du ressort spiral 12 dans l'espace délimité par les bras 16a, 16b et la traverse 20 de cette pièce de fixation 1. De même, on notera que, de manière préférée mais non limitative, la pièce de fixation 1 est réalisée en un matériau plus dur que le matériau dans lequel est réalisé le ressort spiral 12. Grâce à cette caractéristique, lorsque l'on vient pincer la plaquette 13 ou directement l'extrémité libre 8 de la dernière spire à l'extérieur 10 du ressort spiral 12, ni les bras 16a, 16b, ni la traverse 20 de la pièce de fixation 1 ne sont marqués par le ressort spiral 1. Aussi, s'il s'avère nécessaire, en cours de vie de la pièce d'horlogerie équipée de la pièce de fixation 1 selon l'invention, de démonter le ressort spiral 12 en dépliant les bras 16a, 16b de la pièce de fixation 1, on pourra, après intervention, refermer à nouveau les bras 16a, 16b sur l'extrémité libre 8 de la dernière spire à l'extérieur 10 du ressort spiral 12 sans que le repositionnement de cette extrémité libre 8 ne soit gênée par la présence d'éventuelles rainures qui seraient marquées dans les bras 16a, 16b ou la traverse 20.

### Nomenclature

1. Pièce de fixation
F1. Force de serrage élastique
Z. Direction
X, Y. Plan
8. Extrémité libre
10. Dernière spire à l'extérieur
12. Ressort spiral
13. Plaquette
14. Ensemble balancier-spiral
16a, 16b. Bras
18a, 18b. Extrémités libres
A, B. Points de contact
20. Traverse
22. Pont
24. Axe de pivotement
26. Balancier
28. Elément de montage
30. Ouverture
31. Palier de pivotement
32. Cornes
S. Surface de contact

## Revendications

1. Pièce (1) agencée pour assurer la fixation d'un ressort spiral (12) d'un mouvement d'horlogerie, ce ressort spiral (12), enroulé en spires, étant délimité par des première et seconde faces qui s'étendent à distance l'une de l'autre, cette pièce de fixation (1) comprenant des moyens de serrage déformables élastiquement qui sont agencés pour être amenés en contact du ressort spiral (12) afin d'exercer sur ce ressort spiral (1) une force de serrage élastique afin de garantir son immobilisation, cette force de serrage élastique s'exerçant selon au moins une première ligne de contact (A ; B) sur la première face du ressort spiral (12) et selon une surface de contact (S) sur la seconde face.

2. Pièce de fixation (1) selon la revendication 1, **caractérisée en ce que** la force de serrage élastique s'exerce sur la première face du ressort spiral (12) selon des première et seconde lignes (A, B) de contact.

3. Pièce de fixation (1) selon la revendication 2, **caractérisée en ce que** les moyens de serrage se présentent sous la forme de premier et second moyens de serrage distincts qui sont en vis-à-vis l'un de l'autre.

4. Pièce de fixation (1) selon la revendication 3, **caractérisée en ce que** les premier et second moyens de serrage se présentent sous la forme de deux bras (16a, 16b) élastiquement déformables dont les extrémités libres (18a, 18b) en regard sont agencées pour être amenées en contact de l'extrémité libre (8) de la dernière spire à l'extérieur (10) du ressort spiral (12) afin d'exercer sur cette extrémité libre (8) une force de serrage élastique (F1) selon une direction (Z) perpendiculaire à un plan (X, Y) dans lequel s'étend le ressort spiral (12).

5. Pièce de fixation (1) selon la revendication 4, **caractérisée en ce que** la pièce de fixation (1) se présente sous la forme d'un diapason qui se referme sur lui-même au niveau des extrémités libres (18a, 18b) en regard des deux bras (16a, 16b).

6. Pièce de fixation (1) selon l'une des revendications 1 à 5, **caractérisée en ce que** la pièce de fixation (1) est munie de moyens de préhension qui sont agencés pour permettre d'écarter les moyens de serrage de l'extrémité libre (8) de la dernière spire à l'extérieur (10) du ressort spiral (12) afin de libérer cette extrémité libre (8).

7. Pièce de fixation (1) selon l'une des revendications 1 à 6, **caractérisée en ce que** la pièce de fixation (1) comprend des moyens pour son montage sur un pont (22) de balancier ou autour d'un palier de pivotement (31) du balancier (26).

8. Pièce de fixation (1) selon l'une des revendications 1 à 7, **caractérisée en ce que** l'assemblage entre la pièce de fixation (1) et l'extrémité libre (8) de la dernière spire à l'extérieur (10) du ressort spiral (12) est démontable.

9. Pièce de fixation (1) selon l'une des revendications 1 à 8, **caractérisée en ce que** la pièce de fixation (1) est obtenue par étampage et pliage.

10. Pièce de fixation (1) selon l'une des revendications 1 à 9, **caractérisée en ce que** la pièce de fixation (1) est réalisée en un matériau plus dur que le matériau dans lequel est réalisé le ressort spiral (12).

11. Pièce de fixation (1) selon l'une des revendications 1 à 10, **caractérisée en ce que** le ressort spiral (12) se présente sous la forme d'un ruban dont les première et seconde faces s'étendent parallèlement l'une à l'autre.

12. Pièce de fixation (1) selon l'une des revendications 1 à 11, **caractérisée en ce que** le ressort spiral (12) est muni d'une plaquette (13) sur laquelle les moyens de serrage exercent la force de serrage élastique pour assurer son immobilisation.
